# EUROPÄISCHE PATENTSCHRIFT

(11) **EP 2 737 282 B1**
(45) Veröffentlichungstag und Bekanntmachung des Hinweises auf die Patenterteilung: **15.02.2017**
(21) Anmeldenummer: 12737758.8
(22) Anmeldetag: 11.07.2012
(51) Int. Cl.: B60T 7/12, B60T 7/18, B60W 30/18, B60W 40/076, B60W 40/11, B60W 40/112, B60W 40/114, F16H 61/20, G01C 21/26, G01S 17/87

(54) **VERFAHREN UND VORRICHTUNG ZUM BESTIMMEN AKTUELLER FAHRZEUGSPEZIFISCHER ORIENTIERUNGSDATEN FÜR EIN FAHRZEUG**
METHOD AND APPARATUS FOR DETERMINING CURRENT VEHICLE-SPECIFIC ORIENTATION DATA FOR A VEHICLE
PROCÉDÉ ET DISPOSITIF POUR LA DÉTERMINATION DE DONNÉES D'ORIENTATION RÉELLES SPÉCIFIQUES D'UN VÉHICULE POUR UN VÉHICULE

(30) Priorität: 27.07.2011 DE 102011079886
(43) Veröffentlichungstag der Anmeldung: 04.06.2014
(73) Patentinhaber: Robert Bosch GmbH, 70442 Stuttgart (DE)
(72) Erfinder: BREUING, Holger, 74360 Ilsfeld (DE)
(86) Internationale Anmeldenummer: PCT/EP2012/063567
(87) Internationale Veröffentlichungsnummer: WO 2013/013978

(56) Entgegenhaltungen:
- EP-A1- 2 325 824
- US-A1- 2005 102 083

## Beschreibung

### Gebiet der Erfindung

Die vorliegende Erfindung betrifft ein Verfahren und eine Vorrichtung zum Bestimmen aktueller fahrzeugspezifischer Orientierungsdaten für ein Fahrzeug, relativ zu einem Weltkoordinatensystem. Die Erfindung betrifft ferner ein Computerprogrammprodukt zur Ausführung eines solchen Verfahrens sowie ein computerlesbares Medium, auf dem ein solches Computerprogrammprodukt gespeichert ist.

### Stand der Technik

In modernen Kraftfahrzeugen wie z.B. Automobilen oder Zügen wird von vielen Fahrzeugfunktionen eine Information über die Orientierung des Fahrzeugs, insbesondere bezüglich des Erdschwerefeldes, benötigt.

Beispielsweise kann ein Anfahrassistent aus der Information, dass das Fahrzeug in einem Neigungswinkel zum Erdschwerefeld orientiert ist, das heißt, dass das Fahrzeug an einem Hang steht, schlussfolgern, wie der Anfahrassistent beim Anfahren des Fahrzeugs am Hang die Bremswirkung beeinflussen soll, um beispielsweise ein unerwünschtes Rückwärtsrollen des Fahrzeugs zu vermeiden.

In einem alternativen Beispiel kann ein aktives Fahrwerk eines frei fahrenden Kraftfahrzeuges oder eines schienengebundenen Kraftfahrzeuges eine Information über die Orientierung des Fahrzeugs relativ zu dem Erdschwerefeld, das heißt, relativ zu einem Weltkoordinatensystem, dazu nutzen, sich aktiv an beispielsweise eine Kurvenneigung der befahrenen Fahrbahn oder Trasse anzupassen.

Bisher wurde eine Orientierung des Fahrzeuges relativ zu einem Weltkoordinatensystem und damit insbesondere indirekt ableitbar relativ zu einer Oberfläche einer Fahrbahn, meist mit Hilfe von Beschleunigungssensoren bestimmt, die Kräfte, die aufgrund des Erdbeschleunigungsfeldes wirken, messen.

DE 199 14 727 A1 beschreibt eine Vorrichtung zum Bestimmen einer Fahrbahnneigungsgröße.

Es wurde jedoch erkannt, dass insbesondere bei geringen Fahrbahnneigungen und/oder dynamischen Fahrvorgängen eine Neigung der Fahrbahn bzw. der Trasse mit herkömmlichen Verfahren und Vorrichtung oft nur unzureichend genau bestimmbar ist.

US2005/0102083 beschreibt eine Vorrichtung und ein Verfahren zum Bestimmen eines absoluten Rollwinkels eines Fahrzeugs anhand von Bildern von Objekten mit starken vertikalen oder horizontalen Strukturen.

EP2325824 beschreibt ein Verfahren wobei ein mit einer Stereokamera aufgenommenes Bild einer Strasse, zusammen mit vertikalen dreidimensionalen Objekten, die sich entlang der Strasse befinden, analysiert wird um eine Gradiente der Strasse zu bestimmen.

### Offenbarung der Erfindung

Ein Verfahren bzw. eine Vorrichtung zum Bestimmen aktueller fahrzeugspezifischer Orientierungsdaten für ein Fahrzeug relativ zu einem Weltkoordinatensystem, wie es in den unabhängigen Ansprüchen der

Anmeldung definiert ist, ermöglicht insbesondere eine zuverlässige Bestimmung der Orientierung bzw. Neigung des Fahrzeugs innerhalb eines Weltkoordinatensystems und insbesondere in Relation zu einer Orientierung der Fahrbahn bzw. Trasse, unabhängig von dynamischen Bewegungen des Fahrzeugs und mit hoher Messgenauigkeit. Vorteilhafte Ausführungsformen der Erfindung sind in den abhängigen Ansprüchen definiert.

Das erfindungsgemäße Verfahren umfasst die folgenden Verfahrensschritte: Zunächst wird wenigstens ein Referenzobjekt erkannt. Dieses Referenzobjekt wird so ausgewählt, dass es typischerweise eine vorgegebene bekannte absolute Orientierung relativ zu dem Weltkoordinatensystem aufweist. Beispielsweise können Flanken von Häusern, Masten von Laternen oder Hochspannungsmasten, die typischerweise lotrecht zum Erdschwerefeld angeordnet sind, als Referenzobjekte dienen. Das Referenzobjekt wird dabei mit Hilfe eines in dem Fahrzeug montierten Objekterkennungssystems erkannt. Als nächstes wird die relative Orientierung des Referenzobjektes relativ zu einer aktuellen Orientierung des Objekterkennungssystems ermittelt. Da die Orientierung des Objekterkennungssystems innerhalb des Fahrzeugs, in dem es montiert ist, vorbekannt sein kann, kann auf diese Weise auch die aktuelle Orientierung des Fahrzeuges relativ zu der Orientierung des Referenzobjektes ermittelt werden. Als letztes werden die aktuellen fahrzeugspezifischen Orientierungsdaten basierend auf der ermittelten relativen Orientierung des Referenzobjektes bestimmt.

Die zu bestimmenden aktuellen fahrzeugspezifischen Orientierungsdaten können dabei Informationen umfassen, die in Bezug zu einer aktuellen absoluten Orientierung des Fahrzeuges, bezogen auf ein Weltkoordinatensystem stehen. Das Weltkoordinatensystem soll dabei ein Bezugskoordinatensystem darstellen, das sowohl unabhängig von der aktuellen Orientierung des Fahrzeugs als auch unabhängig von der Umgebung des Fahrzeugs ist.

Unter der Orientierung des Fahrzeugs bzw. des Referenzobjektes soll dabei eine Richtung verstanden werden, in die sich eine das Fahrzeug kennzeichnende Achse bzw. eine das Referenzobjekt kennzeichnende Achse erstreckt und gerichtet ist. Die Orientierungsdaten enthalten dabei Richtungsinformation in Form von Vektoren.

Beispielsweise können Orientierungsdaten, die eine aktuelle Orientierung des Fahrzeugs widergeben, eine Ausrichtung der Fahrzeuglängsachse und/oder der Fahrzeugquerachse und/oder der Fahrzeughochachse umfassen.

Eine Orientierung des Referenzobjektes kann eine Richtung eines Merkmales des Referenzobjektes sein, die typischerweise bei diesem Referenzobjekt in einer bestimmten, beispielsweise lotrechten Ausrichtung zum Erdschwerefeld ausgerichtet ist und somit typischerweise eine vorbekannte Orientierung innerhalb des Weltkoordinatensystems einnimmt.

Zum Erkennen des Referenzobjektes kann eine Videosensorik verwendet werden. Mit anderen Worten kann das Objekterkennungssystem eine Videosensorik umfassen. Diese Videosensorik kann beispielsweise über einen oder mehrere Bildsensoren verfügen, die beispielsweise als CCD- oder CMOS-Sensoren ausgebildet sind. Die Videosensorik kann dabei dazu ausgelegt sein, stehende Bilder oder bewegte Bildsequenzen der Umgebung des Fahrzeugs aufzunehmen und zu verarbeiten. Insbesondere kann die Videosensorik bzw. das Objekterkennungssystem dazu ausgelegt sein, in aufgenommenen Umgebungsbildern nach vorbestimmten Merkmalen zu suchen. Hierzu können Bildverarbeitungsalgorythmen eingesetzt werden, die aufgenommene Bilder nach vorbestimmten Mustern durchsuchen. Auf diese Weise können Referenzobjekte, die beispielsweise einem bestimmten vordefinierten Muster entsprechen, erkannt werden und deren Orientierung im Weltkoordinatensystem festgestellt. Das Erkennen des Referenzobjektes sowie das Ermitteln von dessen Orientierung kann dabei berührungs- und verschleißfrei erfolgen. Es können ein oder mehrere Referenzobjekte gleichzeitig oder in kurzer Zeitfolge hintereinander erkannt werden und deren Orientierung ermittelt werden.

Die mit Hilfe des Objekterkennungssystems bestimmten aktuellen fahrzeugspezifischen Orientierungsdaten können, basierend auf Orientierungsmodelldaten, die unabhängig von dem Referenzobjekt ermittelt werden, verifiziert werden. Die Orientierungsmodelldaten können dabei Daten von einer Inertialsensorik, Kartendaten und/oder Orientierungsdaten anderer Referenzobjekte beinhalten. Mit anderen Worten kann die Information über eine aktuelle Orientierung des Fahrzeugs oder über eine Orientierung der Fahrbahn bzw. der Trasse, auf der das Fahrzeug sich aktuell bewegt, relativ zu dem Fahrzeug anhand zusätzlicher Daten verifiziert und somit plausibilisiert werden, wobei diese zusätzlichen Daten unabhängig von den zunächst für die Ermittlung der fahrzeugspezifischen Orientierungsdaten herangezogenen Referenzobjekte ermittelt werden können. Auf diese Weise kann die Zuverlässigkeit der mit Hilfe des vorgeschlagenen Verfahrens bestimmten aktuellen fahrzeugspezifischen Orientierungsdaten erhöht werden.

Erfindungsgemäss beinhalten die zu bestimmenden aktuellen fahrzeugspezifischen Orientierungsdaten aktuelle relative Fahrzeugorientierungsdaten, d.h. eine Information über die aktuelle Orientierung des Fahrzeugs relativ beispielsweise zu einer Fahrbahn. Das Verfahren weist dabei die folgenden zusätzlichen Schritte auf: Zunächst wird eine absolute lokale Fahrbahnorientierung ermittelt. Anschließend werden die aktuellen relativen Fahrzeugorientierungsdaten relativ zu der ermittelten lokalen Fahrbahnorientierung basierend auf der ermittelten absoluten lokalen Fahrbahnorientierung und der ermittelten Orientierung des Referenzobjektes bestimmt. Die absolute lokale Fahrbahnorientierung kann hierbei beispielsweise aus einer Datenbank ermittelt werden, die z.B. kartographische Daten enthält.

Mit anderen Worten kann eine Fahrbahnorientierung, die auch als Trassenneigung bezeichnet werden kann, zunächst anhand weiterer Informationsquellen, zum Beispiel aus Kartendaten oder Navigationsdaten, ermittelt werden. Anschließend kann anhand dieser Information über die lokale Fahrbahnorientierung sowie aus der ebenfalls ermittelten Information über die Orientierung des Referenzobjektes und damit der absoluten Orientierung des Fahrzeugs im Weltkoordinatensystem eine Information über die Orientierung des Fahrzeugs relativ zu einer Orientierung der Fahrbahn bestimmt werden.

Eine solche Information über die relative Orientierung zwischen dem Fahrzeug und der Fahrbahn kann beispielsweise von verschiedenen Sicherheits- und/oder Fahrerassistenzsystemen des Fahrzeugs benutzt werden, um beispielsweise Einstellungen des Fahrwerks, der Bremsen und/oder der Sicherheitssysteme zu beeinflussen.

Eine erfindungsgemäße Vorrichtung zum Bestimmen aktueller fahrzeugspezifischer Orientierungsdaten weist unter anderem ein in dem Fahrzeug montiertes Objekterkennungssystem und ein Datenverarbeitungssystem auf und ist dazu ausgebildet, das oben beschriebene Verfahren auszuführen.

Das Objekterkennungssystem kann dabei beispielsweise als Videosensorik ausgebildet sein, um mit geeigneten Kameras eine Umgebung des Fahrzeugs aufnehmen zu können. Das Datenverarbeitungssystem kann dazu ausgelegt sein, in den aufgenommenen Bildern nach Mustern von Referenzobjekten zu suchen und anschließend deren Orientierung relativ zu dem Objekterkennungssystem zu bestimmen.

Erfindungsgemäß wird ferner ein Computerprogrammprodukt vorgeschlagen, das einen computerlesbaren Programmcode enthält, der, wenn er auf einem Computer ausgeführt wird, den Computer dazu veranlasst, das oben beschriebene Verfahren zum Bestimmen aktueller fahrzeugspezifischer Orientierungsdaten auszuführen bzw. zu steuern. Das Computerprogrammprodukt kann dabei in jeder computerlesbaren Form oder Computersprache implementiert sein.

Ferner wird ein computerlesbares Medium vorgeschlagen, das ein solches Computerprogrammprodukt als Speicherinhalt enthält. Das computerlesbare Medium kann dabei beispielsweise in Form einer CD, DVD, flüchtigen oder nicht flüchtigen Speichers, oder ähnlichem vorliegen.

Das Computerprogrammprodukt bzw. das computerlesbare Medium kann dabei dazu ausgebildet sein, beispielsweise ein in einem Fahrzeug vorgesehenes Steuergerät dahingehend zu programmieren und Signale von einem vorzugsweise visuell arbeitenden Objekterkennungssystem derart zu verarbeiten, dass gemäß dem oben beschriebenen Verfahren aktuelle fahrzeugspezifische Orientierungsdaten relativ zu ebenfalls ermittelten Orientierungen eines oder mehrerer Referenzobjekte bestimmt werden.

Es wird darauf hingewiesen, dass mögliche Merkmale und Vorteile von Ausführungsformen der Erfindung hierin teilweise in Bezug auf das vorgeschlagene Verfahren und teilweise in Bezug auf die vorgeschlagene Vorrichtung beschrieben sind. Ein Fachmann wird erkennen, dass die Merkmale untereinander kombiniert und insbesondere von dem Verfahren auf die Vorrichtung und umgekehrt übertragen werden können, um so beispielsweise Synergieeffekte zu erzielen.

### Kurze Beschreibung der Zeichnung

Nachfolgend wird eine Ausführungsform der Erfindung mit Bezug auf die beigefügte Zeichnung beschrieben. Weder die Zeichnung noch die Beschreibung sollen als die Erfindung einschränkend ausgelegt werden.

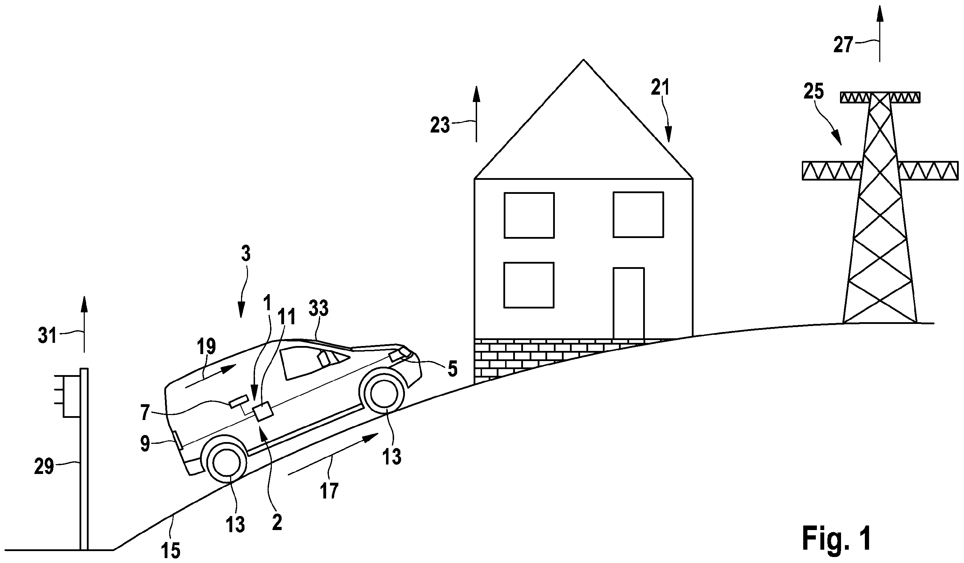

- Fig. 1: zeigt ein Fahrzeug, das mit einer Vorrichtung zum Durchführen eines Verfahrens zum Bestimmen aktueller fahrzeugspezifischer Orientierungsdaten gemäß einer Ausführungsform der vorliegenden Erfindung ausgestattet ist.

Die Figur ist lediglich schematisch und nicht maßstabsgetreu.

### Ausführungsformen der Erfindung

Fig. 1 zeigt ein Fahrzeug 3, das mit einer Vorrichtung 1 zum Bestimmen aktueller fahrzeugspezifischer Orientierungsdaten des Fahrzeugs relativ zu einem Weltkoordinatensystem ausgestattet ist.

Die Vorrichtung 1 weist ein Objekterkennungssystem 2 auf, das mit Hilfe einer Videosensorik, die eine Mehrzahl von über das Fahrzeug 3 verteilten Videokameras 5, 7, 9 umfasst, Bilder der Umgebung des Fahrzeugs 3 aufnehmen kann. Entsprechende Bilddaten werden von den Kameras 5, 7, 9 an ein Datenverarbeitungssystem 11, das Teil eines Steuergerätes des Fahrzeugs 3 sein kann, geliefert.

Während des Betriebs des Fahrzeugs 3 kann das Objekterkennungssystem 2 kontinuierlich Bilder der Umgebung von den Kameras 5, 7, 9 an das Datenverarbeitungssystem 11 schicken. Das Datenverarbeitungssystem 11 sucht in diesen Bildern nach Mustern, die es als typisch für bestimmte Referenzobjekte kennt. Solche Referenzobjekte können zum Beispiel Häuser 21, Hochspannungsmasten 25 oder Verkehrsampeln 29 sein.

Allgemein können alle Objekte als Referenzobjekt dienen, sofern für sie eine typische Orientierung bekannt ist, mit der sie in einem Weltkoordinatensystem angeordnet sind. Bei Wänden eines Hauses 21 ist eine solche Orientierung 23 beispielsweise eine Lotrechte, das heißt, eine Richtung des Erdschwerdefeldes. Ähnlich kann auch die Haupterstreckungsrichtung 27 eines Hochspannungsmastes 25 oder die Haupterstreckungsrichtung 31 einer Verkehrsampel 29, die ebenfalls typischerweise lotrecht orientiert sind, als vorgegebene Orientierung es Referenzobjektes in einem Weltkoordinatensystem erkannt werden.

Nachdem das Objekterkennungssystem 2 ein Referenzobjekt 21, 25, 29 erkannt hat, kann es beispielsweise anhand einer Datenbank ermitteln, welche Orientierung das jeweilige Referenzobjekt typischerweise in einem Weltkoordinatensystem einnimmt. Die Datenbank kann weitere Informationen zu dem jeweiligen Referenzobjekt beinhalten. Beispielsweise können in der Datenbank Informationen über eine Wahrscheinlichkeit, mit der das Referenzobjekt tatsächlich die typische Orientierung einnimmt, enthalten. Das Objekterkennungssystem kann dabei ein einziges Referenzobjekt, oder falls zum Beispiel eine höhere Zuverlässigkeit benötigt werden sollte, eine Mehrzahl von Referenzobjekten erfassen und deren Orientierung im Weltkoordinatensystem ermitteln.

Da die Anordnung und Orientierung der Kameras 5, 7, 9 und damit des Objekterkennungssystems 2 an dem Fahrzeug 3 bekannt ist, kann nun die aktuelle Orientierung des Objekterkennungssystems 2 relativ zu der Orientierung des erkannten Referenzobjektes 21, 25, 29 ermittelt werden und hieraus beispielsweise eine aktuelle absolute Orientierung 19 des Fahrzeugs 3, das heißt, aktuelle fahrzeugspezifische Orientierungsdaten relativ zu der ermittelten Orientierung 23, 27, 31 des Referenzobjektes 21, 25, 29, bestimmt werden.

Wenn das Fahrzeug 3 beispielsweise in dem Objekterkennungssystem 2 ergänzend über eine Sensorik verfügt, mit der eine Fahrzeugorientierung durch Bestimmung der Position des Chassis 33 des Fahrzeugs 3 relativ zu einer aktuellen Position von Rädern 13 des Fahrzeugs 3 ermittelt werden kann, kann basierend auf solchen Daten, auch auf eine Orientierung 17 der aktuell von dem Fahrzeug 3 befahrenen Fahrbahn relativ zu der Orientierung 19 des Fahrzeugs geschlossen werden.

Alternativ kann das Fahrzeug 3 beispielsweise in dem Objekterkennungssystem 2 eine weitere Datenbank enthalten, in der Informationen über lokale Fahrbahnorientierungen 17, beispielsweise in Form von Kartenmaterial, gespeichert ist. Aufgrund solcher Information kann bei bekannter Trassenneigung somit auf eine genaue Position bzw. Orientierung des Fahrzeugs 3 relativ zu der Orientierung der Trasse geschlossen werden.

Das beschriebene Verfahren bzw. die beschriebene Vorrichtung können eine absolute, zuverlässige, verschleißarme und kostengünstige Bestimmung von aktuellen fahrzeugspezifischen Orientierungsdaten ermöglichen.

## Patentansprüche

1. Verfahren zum Bestimmen aktueller fahrzeugspezifischer Orientierungsdaten (17, 19) für ein Fahrzeug (3) relativ zu einem Weltkoordinatensystem, wobei das Verfahren die folgenden Schritte aufweist:
- Erkennen wenigstens eines Referenzobjektes (21, 25, 29), das typischerweise eine vorgegebene absolute Orientierung (23, 27, 31) relativ zu dem Weltkoordinatensystem aufweist, mittels eines in dem Fahrzeug (3) montierten Objekterkennungssystems (2);
- Ermitteln der relativen Orientierung des Referenzobjektes (21, 25, 29) relativ zu einer aktuellen Orientierung des Objekterkennungssystems;
- Bestimmen der aktuellen fahrzeugspezifischen Orientierungsdaten (17, 19) basierend auf der ermittelten relativen Orientierung des Referenzobjektes,
**dadurch gekennzeichnet, dass** die zu bestimmenden aktuellen fahrzeugspezifischen Orientierungsdaten aktuelle relative Fahrzeugorientierungsdaten beinhalten und dass das Verfahren ferner die folgenden Schritte aufweist:
- Ermitteln einer absoluten lokalen Fahrbahnorientierung (17);
- Bestimmen der aktuellen relativen Fahrzeugorientierungsdaten relativ zu der ermittelten lokalen Fahrbahnorientierung basierend auf der ermittelten absoluten lokalen Fahrbahnorientierung (17) und der ermittelten relativen Orientierung des Referenzobjektes (21, 25, 29).

2. Verfahren nach Anspruch 1, wobei das Referenzobjekt mittels Videosensorik (5, 7, 9) erkannt wird.

3. Verfahren nach Anspruch 1 oder 2, wobei die bestimmten aktuellen fahrzeugspezifischen Orientierungsdaten (17, 19) verifiziert werden basierend auf Orientierungsmodelldaten, die unabhängig von dem Referenzobjekt (21, 25, 29) ermittelt werden.

4. Verfahren nach Anspruch 3, wobei die Orientierungsmodelldaten Daten von einer Inertialsensorik, Kartendaten und/oder Orientierungsdaten anderer Referenzobjekte (21, 25, 29) beinhalten.

5. Verfahren nach einem der vorangegangenen Ansprüche, wobei die absolute lokale Fahrbahnorientierung (17) aus einer Datenbank ermittelt wird.

6. Vorrichtung (1) zum Bestimmen aktueller fahrzeugspezifischer Orientierungsdaten (17, 19) für ein Fahrzeug (3) relativ zu einem Weltkoordinatensystem, aufweisend:
ein in dem Fahrzeug (3) montiertes Objekterkennungssystem (2); und
ein Datenverarbeitungssystem (11);
**dadurch gekennzeichnet, dass** die Vorrichtung (1) dazu ausgebildet ist, ein Verfahren gemäß einem der Ansprüche 1 bis 5 auszuführen.

7. Computerprogrammprodukt, **dadurch gekennzeichnet, dass** das Computerprogrammprodukt dazu ausgebildet ist, wenn es auf einem Computer ausgeführt wird, ein Verfahren gemäß einem der Ansprüche 1 bis 5 auszuführen.

8. Computerlesbares Medium **dadurch gekennzeichnet, dass** auf dem computerlesbaren Medium ein Computerprogrammprodukt gemäß Anspruch 7 gespeichert ist.

## Claims

1. Method for determining current vehicle-specific orientation data (17, 19) for a vehicle (3) relative to a global coordinate system, the method having the following steps:
- detecting at least one reference object (21, 25, 29), which typically has a predetermined absolute orientation (23, 27, 31) relative to the global coordinate system, by means of an object detection system (2) mounted in the vehicle (3);
- determining the relative orientation of the reference object (21, 25, 29) relative to a current orientation of the object detection system;
- determining the current vehicle-specific orientation data (17, 19) based on the determined relative orientation of the reference object, **characterized in that** the current vehicle-specific orientation data to be determined contain current relative vehicle orientation data and that the method also has the following steps:
- determining an absolute, local roadway orientation (17);
- determining the current relative vehicle orientation data relative to the local roadway orientation determined based on the absolute local roadway orientation (17) determined and the relative orientation of the reference object (21, 25, 29) determined.

2. Method according to Claim 1, wherein the reference object is detected by means of a video sensor system (5, 7, 9).

3. Method according to Claim 1 or 2, wherein current vehicle-specific orientation data (17, 19) determined are verified on the basis of orientation model data which are determined independently of the reference object (21, 25, 29).

4. Method according to Claim 3, wherein the orientation model data contain data from an inertial sensor system, map data and/or orientation data of other reference objects (21, 25, 29).

5. Method according to one of the preceding claims, wherein the absolute local roadway orientation (17) is determined from a database.

6. Apparatus (1) for determining current vehicle-specific orientation data (17, 19) for a vehicle (3) relative to a global coordinate system having: an object detection system (2) mounted in the vehicle (3); and a data processing system (11); **characterized in that** the apparatus (1) is designed to carry out a method according to one of Claims 1 to 5.

7. Computer program product, **characterized in that** the computer program product is designed to carry out a method according to one of Claims 1 to 5 when it is executed on a computer.

8. Computer-readable medium, **characterized in that** a computer program product according to Claim 7 is stored on the computer-readable medium.

## Revendications

1. Procédé pour la détermination de données d'orientation (17, 19) réelles spécifiques de véhicules pour un véhicule (3) par rapport à un système de coordonnées mondiales, dans lequel le procédé comporte les étapes suivantes :
- détecter au moins un objet de référence (21, 25, 29), qui présente de manière caractéristique une orientation absolue prédéfinie (23, 27, 31) par rapport au système de coordonnées mondiales, au moyen d'un système de détection d'objets (2) monté dans le véhicule (3) ;
- déterminer l'orientation relative de l'objet de référence (21, 25, 29) par rapport à l'orientation réelle du système de détection d'objets ;
- déterminer les données d'orientation réelles spécifiques de véhicules (17, 19) sur la base de l'orientation relative déterminée de l'objet de référence,
**caractérisé en ce que** les données d'orientation réelles spécifiques de véhicules à déterminer contiennent des données d'orientation de véhicule relatives réelles et **en ce que** le procédé comprend en outre les étapes suivantes :
- déterminer une orientation de chaussée (17) locale absolue ;
- déterminer les données d'orientation de véhicule relatives réelles par rapport à l'orientation de chaussée locale déterminée sur la base de l'orientation de chaussée (17) locale absolue déterminée et de l'orientation relative déterminée de l'objet de référence (21, 25, 29).

2. Procédé selon la revendication 1, dans lequel l'objet de référence est détecté au moyen d'un système de capteurs vidéo (5, 7, 9).

3. Procédé selon la revendication 1 ou 2, dans lequel les données d'orientation réelles spécifiques de véhicules (17, 19) déterminées sont vérifiées sur la base de données de modèle d'orientation qui sont déterminés indépendamment de l'objet de référence (21, 25, 29).

4. Procédé selon la revendication 3, dans lequel les données de modèle d'orientation contiennent des données d'un système de capteurs à inertie, des données de cartes, et/ou des données d'orientation d'autres objets de référence (21, 25, 29).

5. Procédé selon l'une quelconque des revendications précédentes, dans lequel l'orientation de chaussée locale absolue (17) est déterminée à partir d'une banque de données.

6. Dispositif (1) de détermination de données d'orientation réelles spécifiques de véhicules (17, 19) pour un véhicule (3) par rapport à un système de coordonnées mondiales, comportant :
un système de détection d'objets (2) monté dans le véhicule (3) ; et
un système de traitement de données (11) ;
**caractérisé en ce que** le dispositif (1) est conçu pour mettre en oeuvre un procédé selon l'une quelconque des revendications 1 à 5.

7. Produit de programme d'ordinateur, **caractérisé en ce que** le produit de programme d'ordinateur est conçu, lorsqu'il est exécuté sur un ordinateur, pour mettre en oeuvre un procédé selon l'une quelconque des revendications 1 à 5.

8. Support lisible par ordinateur **caractérisé en ce qu'**un produit de programme d'ordinateur selon la revendication 7 est stocké sur le support lisible par ordinateur.
